# EUROPEAN PATENT APPLICATION

(11) **EP 4 138 007 A1**
(43) Date of publication of application: **22.02.2023**
(21) Application number: 21192409.7
(22) Date of filing: 20.08.2021
(51) Int. Cl.: G06Q 10/06

(54) **SYSTEMS AND METHODS FOR OPERATING A MANUFACTURING FACILITY**

(71) Applicant: Siemens Aktiengesellschaft, 80333 München (DE)
(72) Inventor: Heberl, Simon, 90409 Nürnberg (DE); Klein, Daniel, 92280 Kastl (DE)

(57) **Abstract**

A method for optimizing operation of a manufacturing facility, comprising: Receiving (S1), by an industrial edge software application (2) hosted on an edge device (3) in the manufacturing facility (2), first production data from a manufacturing execution system (4), MES, the first production data preferably comprising one or more of the following: one or more machine statuses, alarms, process measurements, resource statuses, and/or other data made available by one or more control system, Sending (S2), by the industrial edge software application (2), the first production data and one or more simulation settings to a processing unit (5a, 5b) for executing (S3) a simulation of one or more processes in the manufacturing facility (1) based on the first production data and the simulation settings, Receiving (S4), by the industrial edge software application (2), one or more simulation results of the simulation, and Applying (S5) the simulation results to one or more processes in the manufacturing facility (1).

## Description

### TECHNICAL FIELD

The present disclosure generally relates to industrial control, and, more particularly, to use of simulation for controlling one or more processes in a manufacturing facility.

### BACKGROUND

The digital representation of the production in the form of a discrete event simulation has become a gold standard. More and more customers see the enormous advantage of simulation models, which is why the market is growing continuously.

Simulation software for discrete event simulations, such as Plant Simulation, in combination with optimization algorithms, such as genetic algorithms, particle swarm optimizers or mathematical programming, often implemented in simulation software like HEEDS, are used today for many different applications such as production planning for example by optimizing production sequence, machine utilization and maintenance scheduling. Furthermore, by way of the simulation software, it is possible to predict material consumption and delivery times and to detect bottlenecks in the production. Additionally, it is possible to optimize the production with regard to production costs.

### SUMMARY

Simulations and optimization algorithms can only be used if the manufacturer itself has the appropriate experts and possess the required software. Simulations and adaption of the simulation models can in a meaningful way only be done by the experts. Therefore manufacturers, which benefit from the findings of a simulation may instruct the experts but are not capable of adapting the simulation model themselves. This leads to time delays or tasks are simply solved without simulation to reduce the additional effort avoid and loss of information. Moreover, there are many use cases, e.g., production scheduling or scenario analysis for product routing through production, that require a simulation once a day or even several times a day. If no expert is available onsite, running a simulation on a daily basis is nearly impossible.

In addition, simulations are usually run separately and/or independently from the production data, such as latest machine status, or which type of product is produced at the moment, generated by the production process. This significantly reduces the benefits of the optimization because such an offline simulation only partly reflects the current situation in the manufacturing facility.

Optimizations based on a simulation model may require high-performance computing clusters. Thus, an execution of the simulation on site in a manufacturing facility is hardly possible today.

Optimization algorithms are controlled by various parameters or settings that need to be considered. A variation and optimization of different production scenarios therefore may require adaptation of the simulation's settings. Hence, the level of detail and the possibilities for optimizing a production are either severely limited or overly complex.

The present disclosure aims at overcoming these drawbacks.

According to a first aspect the object is achieved by a method for optimizing operation of a manufacturing facility. The method comprising receiving, by an industrial edge software application hosted on an edge device in the manufacturing facility, first production data from a manufacturing execution system, MES, the first production data preferably comprising one or more of the following: one or more machine statuses, alarms, process measurements, resource statuses, and/or other data made available by one or more control system. The method further comprising sending, by the industrial edge software application, the first production data and one or more simulation settings to a processing unit for executing a simulation of one or more processes in the manufacturing facility based on the first production data and the simulation settings. The method further comprises receiving, by the industrial edge software application, one or more simulation results of the simulation. The method further comprising applying the simulation results to one or more processes in the manufacturing facility.

According to a second aspect the object is achieved by a system, preferably comprising a processor and a memory, operative to perform the method steps according to the first aspect.

According to a third aspect the object is achieved by a use of the method according to the first aspect for maintenance interval optimization, production sequence optimization and/or energy consumption optimization of one or more processes in a manufacturing facility.

According to a fourth aspect the object is achieved by a computer program, preferably stored on a non-transitive medium, the computer program comprising program code that when executed performs the method steps according to the first aspect.

### BRIEF DESCRIPTION OF THE DRAWINGS

Figure 1 shows an illustration of an automation pyramid.
Figure 2 shows an illustration of a manufacturing facility according to a first embodiment.
Figure 3 shows an illustration of a manufacturing facility according to a second embodiment.
Figure 4 shows an illustration of a manufacturing facility according to a third embodiment.
Figures 5 to 11 show exemplary method steps according to different embodiments.
Figure 12 shows an apparatus according to an exemplary embodiment.

### DETAILED DESCRIPTION

Industrial controllers also known as programmable logic controllers, PLCs, and their associated control programming are central to the operation of modern industrial automation systems. These controllers interact with field devices on the plant floor to carry out controlled production processes relating to such objectives as manufacture of a product, material handling, batch processing, wastewater treatment, and other such processes. Industrial controllers store and execute user-defined control programs to effect decision-making in connection with the controlled process. Such programs can include, but are not limited to, ladder logic, sequential function charts, function block diagrams, structured text, or other such platforms.

The various control systems that make up an enterprise are sometimes collectively managed by a Manufacturing Execution System (MES), which monitors real-time data from the plant floor and issues control management instructions in view of higher-level business considerations, such as order management, resource management, inventory, scheduling, etc.

Plant floor operations, including control of industrial processes by the industrial controllers described above, represent one component of a larger business enterprise. On a higher level, business operations such as financial analysis, marketing, sales, order management, long term business planning, resource management, inventory management, and the like collectively represent another element of the enterprise. Many organizations employ an Enterprise Resource Planning (ERP) system or similar business system to correlate and manage these business level functions in a cohesive manner.

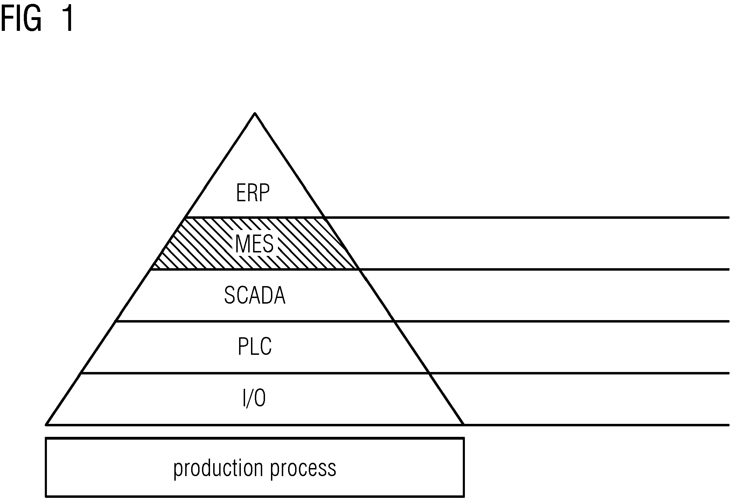

An automation pyramid comprising an ERP system and an MES is shown in Figure 1. The automation pyramid also comprises a Supervisory control and data acquisition (SCADA). SCADA is a control system architecture comprising computers, networked data communications and graphical user interfaces (GUI) for high-level process supervisory management, while also comprising other peripheral devices like programmable logic controllers (PLC) and discrete proportional-integral-derivative (PID) controllers to interface with process plant or machinery. The SCADA may comprise or be located on top of an industrialized input/output (I/O) level. On the lowest level field devices such as flow and temperature sensors, control elements may be located.

Although business level and plant floor level operations are related to and dependent upon one another, the two levels are often only loosely integrated, with slow (e.g., non-real-time, non-automated) information exchange between the two. Moreover, efforts to integrate higher level business systems with plant-side control can be hindered by the need for specialized programming code, necessitating involvement of experienced programmers or IT personnel who may have limited understanding of both the business-side and plant-side operations compared with management or factory personnel, as described in US patent publication US20130124253A1.

In addition to providing workflow instructions, MES system can monitor and receive production data from the control system. Examples of such production data include machine statuses, alarms, process measurements (e.g., telemetry values), resource statuses, or other data made available by control system. Among other uses, MES system can employ this control data to update system models used to select suitable workflows. MES system can also employ the control data to generate report data for provision to ERP system.

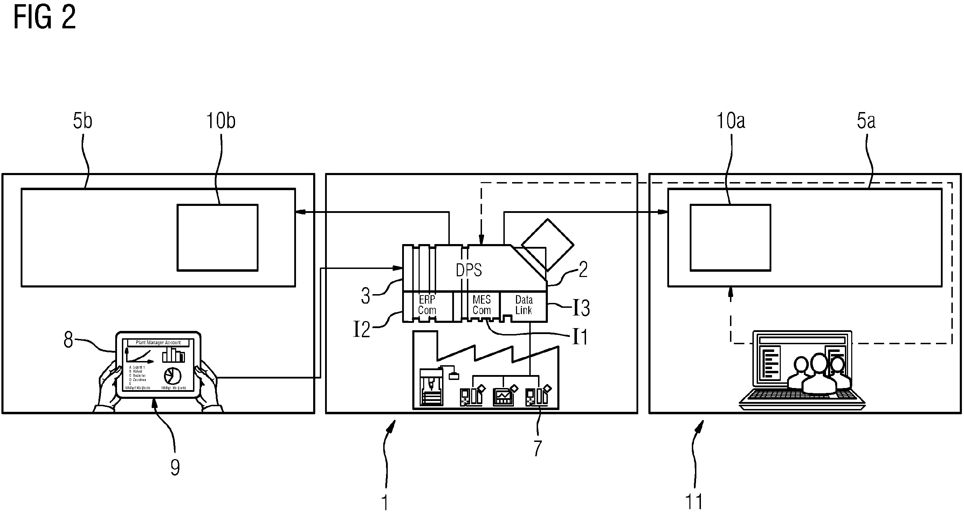

Figure 2 shows an illustration of a manufacturing facility 1 according to a first embodiment. Therein an industrial edge software application 2 is installed on an edge device 3. It is a task of industrial edge software application 2 to collect production data for the simulation model 10a, 10b. Production data may comprise orders, production statuses, warehouse data, buffer utilization, etc. For this purpose, the industrial edge software application 2 has pre-implemented interfaces I1, I2, I3 or interface templates to the ERP system 6 and/or MES 4 to extract the required data.

It is a task of the industrial edge software application 2 to coordinate execution of one or more simulation. Many simulations or even optimizations that require hundreds of simulation runs cannot be executed directly on the edge device for performance reasons. Therefore, simulation and/or optimization runs are carried out depending on the user request on an on-site computing cluster 5b or off-site in a computing cluster 5a. Thus, simulation and/or optimization can be performed as a service on an off-site computing cluster 5a.

The industrial edge software application 2 sends the collected and/or preprocessed production data for the simulation model as well as settings for the simulation, e.g., what is the simulation time, how many iterations should be simulated, how many iterations can run in parallel, etc., to the respective computing cluster and thereby triggers the execution of the simulation. The industrial edge software application 2 may then await the results of the simulation. Subsequently, the industrial edge software application 2 may collect the necessary production data again in order to re-run the simulation. Thus, the industrial edge software application sends the production data and receives the simulation results, which are returned to the industrial edge software application 2. The simulation models 10a, 10b and the simulation software on the other hand, are only installed on the compute clusters 5a, 5b, but not on the edge device 3.

It is another task of the industrial edge software application 2 to prepare the simulation models on the clusters 5a, 5b, so that the production data from the MES 4, the ERP 6 and/or the control devices 7 can be understood by the simulation model. To that end an ontology may be used. In addition, an alert may be implemented in order to notify a user when a compute job on the computing cluster 5a or 5b fails or when real data and simulation data do not match.

It is thus another task of the industrial edge software application 2 to visualize the simulation results. The industrial edge software application 2 can be communicatively coupled to a browser, e.g., of a handheld device 9. The results of the simulation may then be displayed in the browser. To that end, simple visualization options can be created by the user.

In addition, a new execution or (re-)run of the simulation can be set up and started using an input device, e.g., above mentioned handheld device 9. It is also possible to start new simulations runs, define simulation routines, schedule runs and send reports to specific instances or other users.

On the one hand, the advantages of, for example event discrete, simulation, e.g., a very detailed representation of the one or more processes, and on the other hand the optimization with regard to one or more target variables, such as productivity and cost-effectiveness, is enabled, in particular for non-simulation experts. So far, it has not been possible for users, without simulation and optimization know-how, to benefit from the advantages of such tools for the purpose of production planning. Up until now, static data and a planning based on excel sheets has been used. In contrast to the previous solutions, a user-friendly, easy-to-use and configurable simulation and optimization based on the real, dynamic production data is proposed. Thereby well-founded and trustworthy answers are provided to planning questions which leverage hidden potentials. This is made possible by the industrial edge software application 2 that allows processing and distribution of the production data from connected system, such as MES, ERP system and/or one or more control devices. The collected production data are processed according to a given ontology and are sent in a compatible format to the computing clusters 5a, 5b. So far, expert knowledge was required to aggregate the data formats from the various sources and prepared for a simulation.

The industrial edge software application may be encapsulated in a software container, such as docker, and may be run on the edge device 3. The connection to the computing cluster and the simulation running thereon may be implemented using a REST API. The REST API may comprise one or more endpoints in order to (re-)run the simulation and/or to send/receive the production data.

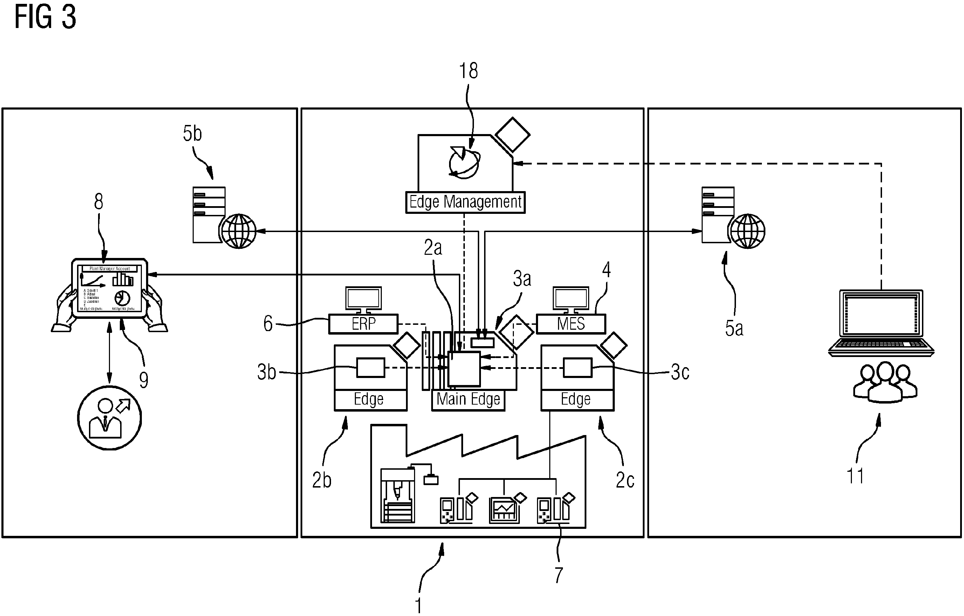

Figure 3 shows an illustration of a manufacturing facility according to a second embodiment.

Child instances, also referred to as software submodules 2b, 2c, of a main software module 2a of the industrial edge software application 2 are to be installed on other edge devices 3b, 3c, to collect the required data on these edge devices, e.g., from individual machines, and send it to the send main module 2a on edge device 3a.

The main module 2a of the industrial edge software application 2 is connected to the MES 4, ERP 6 and one or more software submodules 2b, 2c on other edge devices 3b, 3c for data collection. Additionally, the industrial edge software application 2 may serve as an orchestrator for orchestrating computationally challenging simulation runs with computation clusters. The industrial edge software application 2 may also include a model checker that compares results of the past simulation runs to the actual values that occurred to trigger an update of the simulation model 10a, 10b on a computing cluster 5a, 5b, e.g., in case the simulation model 10a, 10b is inaccurate.

Another task of the industrial edge software application 2 is to update all functions. Through the edge management system 18, the industrial edge software application 2 and/or the visualization can be updated. If a user selects an "on-site" computing cluster 5b, the updated simulation model can be updated there. In case of an "off-site" calculation on a remote computing cluster 5a the simulation model can be updated there.

The edge management application 18 is used to update the industrial edge software application 2. Furthermore, simulation model 10a, 10b updates can be deployed remotely using the edge management application 18. Thus, an update may be triggered comprising the step of sending, by the edge management application 18, updated simulation settings to the industrial edge software application 2 and/or to the computing clusters 5a, 5b also referred to as processing units.

The proposed solution makes it possible to update functionalities via the edge management system 18. In previous solutions, once simulation models had been created, they were soon outdated and did no longer reflect the status of the real production processes in the manufacturing facility 1.

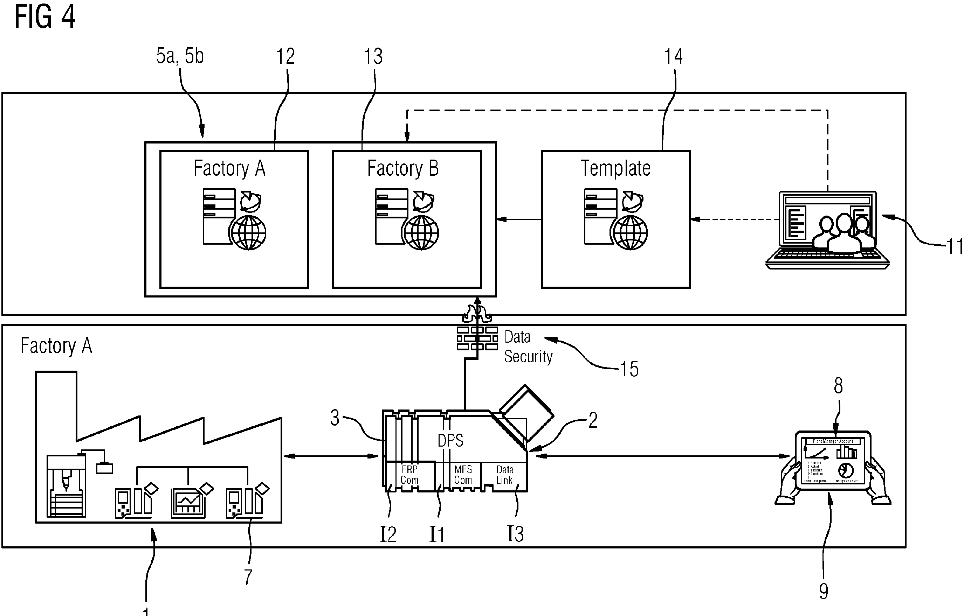

Figure 4 shows an illustration of a manufacturing facility 1 according to a third embodiment. As before, an industrial edge software application 2 is deployed on an edge device 3 in a manufacturing facility 1. A handheld 9 may be communicatively coupled to the industrial edge software application 2. Now, for running a simulation of the one or more processes in the manufacturing facility 1 a simulation model 12 can be used. The simulation model 12 may be based on a simulation model template 14, that is, e.g., chosen by a user or a simulation expert using a terminal 11. The template 14 may comprise a desired optimization algorithm and/or may relate to a type of manufacturing facility 1, e.g., one or more goods produced, or the one or more processes running in the manufacturing facility. Accordingly, a simulation of the one or more processes of the manufacturing facility 1 can be executed. As shown, the computing cluster 5a, 5b may run simulations not only for a first manufacturing facility 1 "Factory A" but also for at least one other manufacturing facility "Factory B". In order to receive the production data from the industrial edge software application 2 the industrial edge software application 2 may be connected to the computing cluster 5a, 5b via a firewall 15, in particular in case of a remote, i.e. off-site computing cluster 5a.

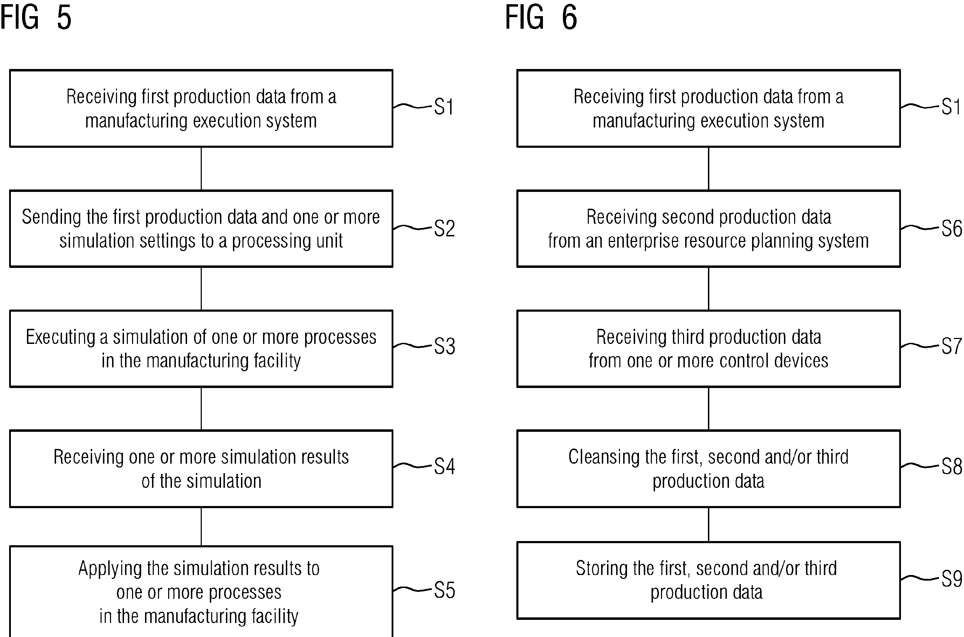

Figures 5 to 11 show exemplary method steps according to different embodiments.

According to Figure 5 first production data is received from a manufacturing execution systemin a step S1. The first production data can be received by an industrial edge software application hosted on an edge device in the manufacturing facility. The first production data may comprise or consists of one or more of the following: one or more machine statuses, alarms, process measurements, resource statuses, and/or other data made available by one or more control system.

In a step S2 the first production data and one or more simulation settings are sent to a processing unit. The first production data may be sent by the industrial edge software application.

In a step S3 a simulation of one or more processes in the manufacturing facility is executed, by the processing unit, based on the first production data and the simulation settings.

In a step S4 Receiving one or more simulation results of the simulation, for example by the by the industrial edge software application. In a step S5 the simulation results are applied to one or more processes in the manufacturing facility. The results of the simulation may for example comprise one or more control parameters for controlling the one or more processes in the manufacturing facility. The results of the simulation may be applied using one or more controllers in the manufacturing facility, e.g., one or more PLCs. For example, the simulation results may comprise an optimized production speed or optimized cycle times or other operation settings such as one or more machine statuses. Furthermore, the optimization results may comprise an optimized production sequence.

In Figure 6 further method steps are shown. As described in the above the industrial edge software application may receive first production data from a MES in a step S1.

In a step S6 second production data are received from an enterprise resource planning, ERP, system. The industrial edge software application may receive the second production data.

In a step S7 third production data may be received from one or more control devices. To that end the industrial edge software application may be directly and/or operatively coupled to one or more control devices.

As before, the first, second and/or third production data and one or more simulation settings are sent to a processing unit. The first, second, and/or third production data may be sent by the industrial edge software application.

In any case, after receiving and before sending the first, second and/or third production data, the first, second and/or third production data may be stored in a step S9 and/or cleansed in a step S8, preferably by the industrial edge software application. Cleansing the first, second and/or third production data may comprise adding or removing a time stamp to a respective data item of the first second and/or third production data. Furthermore, cleansing may comprise adding and/or replacing data items in the first, second and/or third production data by historical data or statistical data. Furthermore, cleansing may comprise converting the first, second and/or third production data from a first format, in which the first, second and/or third production data is received to a second format according to which the first, second and/or third production data is sent, e.g. from OPC UA to another structured format, such as json. Furthermore, the first, second and/or third production data may be encrypted before sending it to the processing unit.

in any case the first, second and/or third production data may be stored on the edge device, e.g., in a memory, or at the location of the processing unit.

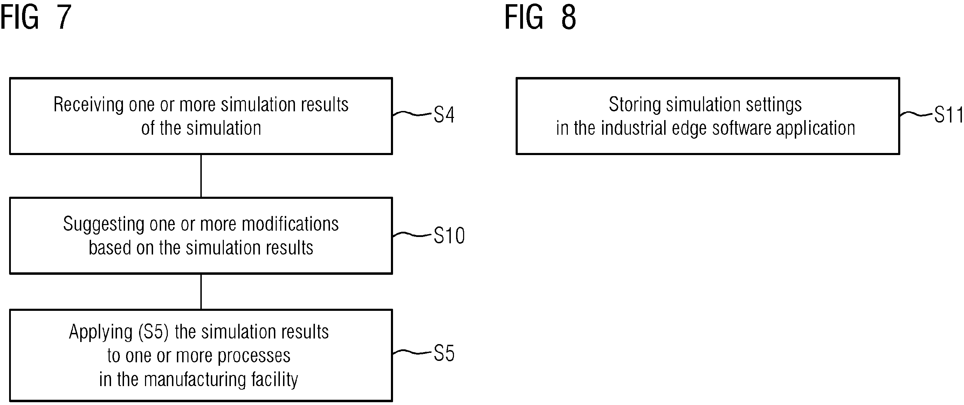

Turning to Figure 7, further method steps are shown. In a step S4 one or more simulation results of the simulation are received, preferably by the industrial edge software application. The simulation results may comprise one or more suggestions for optimizing the one or more processes in the manufacturing facility.

Thus, in a step S10 one or more modifications regarding the one or more processes in the manufacturing facility may be suggested based on the simulation results. For example, the suggestions may be displayed on a display in order for a user to select the most appropriate or desired option.

In a step S5 the simulation results may be applied to one or more processes in the manufacturing facility. in that case the one of the modifications suggested and selected by a user may be applied.

Now turning to Figure 8, simulation settings may be stored in the industrial edge software application. For example, the simulation setting may be stored in a memory of the edge device on which the industrial edge software application is deployed.

By way of the simulation settings the industrial edge software application is capable of controlling the execution of the simulation. Thereby, it is possible to control the simulation and/or optimization runs carried out, e.g., according to the simulation settings, e.g., provided by a user, for example via a display and/or input device, in the manufacturing facility. Thus, the simulation settings may be entered and/or stored in the industrial edge software application, e.g., by a user. The industrial edge software application may then send the collected first, second and/or third production data for the simulation model as well as the simulation settings for the simulations to the processing unit. The simulation settings may comprise a time period for carrying out the simulation, an indicator indicating one or more processes to be simulated. The simulation models and the simulation software are only installed on the processing unit, such as computing clusters described in the above. In any case, the industrial edge software application may be used to send (only) the simulation settings as received, e.g., from a user, for example via an input device, to the one or more processing units in order to execute the simulation model. Accordingly, it is possible for a user to initiate from the shopfloor level of the manufacturing facility one or more simulation runs of the simulation using the simulation model. Thus, a used (located at the shopfloor level of the industrial facility) may enter simulation settings into an input device that is communicatively connected with the industrial edge application. The industrial edge application may then send the simulation settings to the processing unit, which may be located remotely, where the simulation is executed based on the simulation settings as provided by the user via the input device.

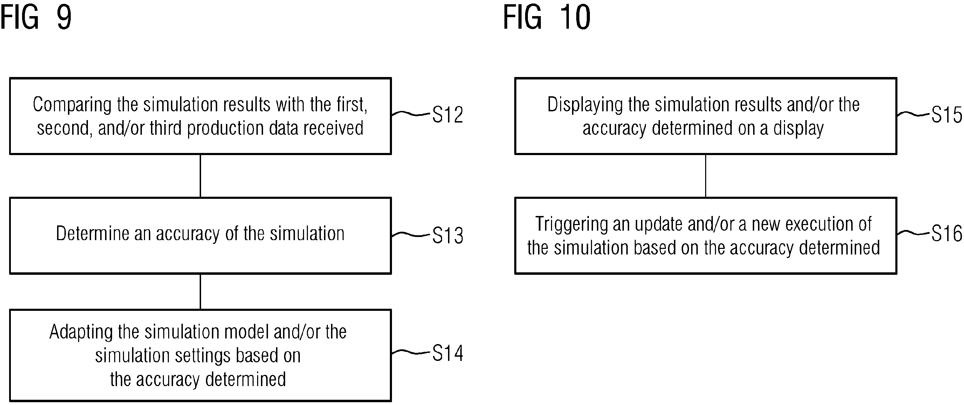

In Figure 9 further method steps are shown. In a step S12 the simulation results are compared with the first, second, and/or third production data received. Thus, after the simulation results are received by the industrial edge software application, the industrial edge software application may act as a simulation model checker. To that end, the simulation results, e.g., with the (stored) first, second and/or third production data or past simulation results. Thus, based on the comparison an accuracy of the simulation results can be determined in a step S13, e.g., by the industrial edge software application. Based on the accuracy determined the simulation model and/or the simulation settings may be adapted in a step S14.

Still further method steps are shown in Figure 10. In a step S10 the simulation results and/or the accuracy determined are displayed on a display. For example, the display may be on a handheld device. A user may read the displayed simulation results and/or accuracy determined and for example apply the simulation results to one or more processes in the manufacturing facility and/or adapt the simulation model and/or the simulation settings.

Hence, in a step S16 an update and/or a new execution of the simulation based on the accuracy determined may be triggered. For example, an input device operatively coupled to the industrial edge application can be used to that end. Subsequently updated simulation settings are sent to the industrial edge application and/or to the processing unit for executing the simulation.

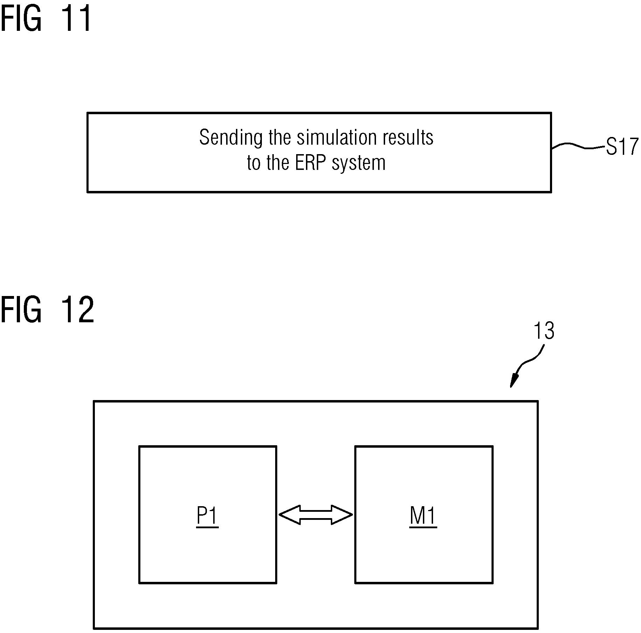

According to the step S17 shown in Figure 11 the simulation results are sent to the ERP system. The industrial edge software application may receive the simulation results and sent at least part of the simulation results to the ERP system. The simulation results be taken over by the ERP system and used for planning production in the manufacturing facility, e.g., production of a specified quantity of a product.

Then the ERP system sends a request to the MES. The request may include production requests and/or resource allocation requests. As mentioned, the production request can comprise, for example, a request from the ERP system to produce a specified quantity of a product. The MES may receive the production request from the ERP system and determine one or more possible workflows for producing the desired amount of the indicated product based on the one or more processes in the manufacturing facility. To that end, the MES may determine which machines are available and capable of producing the desired amount of the product, a suitable control strategy to be executed by the machines to satisfy the request. The MES can then transform a suitable workflow into an output executable by the control system to implement the workflow.

Figure 12 shows a system 13 according to an exemplary embodiment. The system 13, preferably an edge device, comprises a processor P1 and a memory M1 that are communicatively coupled to each other. The processor P1 may be operative to perform one or more method steps of a computer program stored in the memory M1. The memory comprising program code stored therein that when executed by the processor perform the method steps of any one or more of the embodiments described in the above. The system may comprise an apparatus, e.g., an edge device, for performing the method steps of any one of the above embodiments. For example, the industrial edge software application may be stored on the apparatus.

The system 13 may comprise one or more apparatuses, e.g., one or more edge devices according to the above mentioned embodiments. For example, the system may comprise a plurality of edge devices wherein on a first edge device the main module of the industrial edge application is stored and wherein on the at least one other edge device a submodule of the industrial edge software application is stored.

The system may also comprise a processing unit, such as the computing cluster, to perform any one of the method steps relating to the simulation.

The system 13 may also comprise a manufacturing facility.

It should be understood, that more than one processors P1 and more than one memory M1 may be present in order to perform the method steps of any one or more of the embodiments described in the above.

## Claims

1. A method for optimizing operation of a manufacturing facility, comprising:
Receiving (S1), by an industrial edge software application (2) hosted on an edge device (3) in the manufacturing facility (2), first production data from a manufacturing execution system (4), MES, the first production data preferably comprising one or more of the following: one or more machine statuses, alarms, process measurements, resource statuses, and/or other data made available by one or more control system,
Sending (S2), by the industrial edge software application (2), the first production data and one or more simulation settings to a processing unit (5a, 5b) for executing (S3) a simulation of one or more processes in the manufacturing facility (1) based on the first production data and the simulation settings,
Receiving (S4), by the industrial edge software application (2), one or more simulation results of the simulation, and Applying (S5) the simulation results to one or more processes in the manufacturing facility (1).

2. The method according to the preceding claim, further comprising the step of:
Receiving (S6), by the industrial edge software application (2) in the manufacturing facility (1), second production data from an enterprise resource planning (6), ERP, system, the second production data preferably comprising one or more of the following one or more purchase orders, production capacity, one or more stock numbers of materials, working plans; and/or
Receiving (S7), by the industrial edge software application (2), third production data from one or more control devices (7) of the manufacturing facility (1).

3. The method according to any one of the preceding claims, further comprising the step of:
Cleansing (S8) the first, second and/or third production data before sending the first, second and/or third production data to the processing unit (5a, 5b).

4. The method according to any one of the preceding claims, further comprising the step of:
Storing (S9) the first, second and/or third production data on the edge device (3) or a location of the processing unit (5a, 5b).

5. The method according to any one of the preceding claims, further comprising the step of:
Suggesting (S10) one or more modifications regarding the one or more processes in the manufacturing facility (1) based on the simulation results.

6. The method according to any one of the preceding claims, further comprising the step of:
Storing (S11) simulation settings in the industrial edge software application (2), the one or more settings preferably comprising: a production period of the one or more processes in the manufacturing facility (1), a number of simulation iterations and/or an execution schedule indicating of the simulation.

7. The method according to any one of the preceding claims, further comprising the step of:
Comparing (S12), the simulation results with the first, second, and/or third production data received in order to determine (S13) an accuracy of the simulation,
Adapting (S14) the simulation model and/or the simulation settings based on the accuracy determined.

8. The method according to any one of the preceding claims, further comprising the step of:
Displaying (S15) the simulation results and/or the accuracy determined on a display (8), the display preferably operatively coupled to the industrial edge software application (2), and
Triggering (S16) an update and/or a new execution of the simulation based on the accuracy determined, e.g., in case the accuracy exceeds a predetermined threshold, and/or based on a user input received via an input device (9) operatively coupled to the industrial edge software application (2).

9. The method according to any one of the preceding claims, the simulation results preferably comprising data relating to the ERP system (6), and further comprising the step of:
Sending (S17), by the industrial edge software application (2), the simulation results to the ERP system (6).

10. The method according to any one of the preceding claims, further comprising the step of:
the industrial edge software application (2) comprising a main software module (2a) on a first edge device (3a), the main software module (2a) comprising a first interface (I1) for receiving the first production data from the MES (4) system and a second interface (12) for receiving the second production data from the ERP (6) system,
the industrial edge software application (2) comprising one or more software submodules (3b, 3c) on a second and/or third edge device (2b, 2c), the one or more software submodules comprising a third interface (13) for receiving the third production data from the one or more control devices (7) of the manufacturing facility (1).

11. A system (13), preferably comprising a processor and a memory, operative to perform the method steps of any one of the preceding claims.

12. Use of the method according to any one of the claims 1 to 11 for maintenance interval optimization, production sequence optimization and/or energy consumption optimization of one or more processes in the manufacturing facility (1).

13. A computer program, preferably stored on a non-transitive medium, the computer program comprising program code that when executed performs the method steps of any one of the claims 1 to 11 and 12.
